# EUROPÄISCHE PATENTSCHRIFT

(11) **EP 1 970 310 B1**
(45) Veröffentlichungstag und Bekanntmachung des Hinweises auf die Patenterteilung: **11.11.2009**
(21) Anmeldenummer: 07005453.1
(22) Anmeldetag: 16.03.2007
(51) Int. Cl.: B65B 9/20, B65B 53/02, B32B 27/08, B65D 33/02, B65D 65/40, B65D 81/34

(54) **Verfahren zum Herstellen eines Schlauchbeutels, Schlauchbeutel sowie zur Herstellung des Schlauchbeutels geeignete Folie**
Method for manufacturing a tubular bag, tubular bag and film suitable for manufacturing the tubular bag
Procédé de fabrication d'un sac tubulaire, sac tubulaire tout comme feuille appropriée à la fabrication du sac tubulaire

(43) Veröffentlichungstag der Anmeldung: 17.09.2008
(73) Patentinhaber: Ludger Fuest, 53881 Euskirchen (DE)
(72) Erfinder: Fink, Bernhard, 1060 Wien (AT); Krainz, Michael, 1180 Wien (AT); Washüttl, Michael, 1130 Wien (AT)
(74) Vertreter: Grünecker, Kinkeldey, Stockmair & Schwanhäusser Anwaltssozietät

(56) Entgegenhaltungen:
- WO-A-96/13434
- FR-A- 2 861 692
- GB-A- 1 212 093
- US-A1- 2002 094 434

## Beschreibung

Die vorliegende Erfindung betrifft ein Verfahren zum Herstellen eines Schlauchbeutels, bei dem eine zunächst ebene Bahn einer Folie über eine Formschulter geformt und durch eine Längsschweißnaht zu einem Schlauch gebildet wird, die sich in Zuführrichtung des Schlauches erstreckt, Schüttgut in einen Längenabschnitt des Schlauches eingefüllt und der oberund unterseitig durch Querschweißnähte geschlossene Längenabschnitt als gefüllter Schlauchbeutel von der zugeführten Bahn abgetrennt wird.

Ein entsprechendes Verfahren wird auch als Form-Fill-Seal-Verfahren bezeichnet und ist beispielsweise aus der gattungsbildenden GB 1 212 093 A bekannt. Die zum Einsatz kommende Folie kann eine ein- oder mehrlagige Folie sein. Verpackt werden mit diesen Verfahren beispielsweise Münzen, Lebensmittel oder andere granulare Materialien. Ein weiteres Verfahren ist aus der WO 96/13434 A bekannt, die ein Verfahren zum Schrumpfen einer Schrumpffolie offenbart, die einen elektrischen Widerstandsbereich oder einen bereich zur Absorption von Mikrowellen umfasst, so dass nach Zuführen von elektrischem Strom oder Mikrowellen in diesen Bereichen entsprechend Energie erzeugt werden kann. Diese Bereiche werden auf der Oberfläche der Schrumpffolie durch ein Druckverfahren, beispielsweise durch ei Offset-Druckverfahren aufgebracht und können vollflächig auf der Schrumpffolie oder in Teilbereichen vorgesehen sein. Die WO 96/13434 offenbart eine Folie gemäß dem Oberbegriff des Anspruchs 14.
Die DE 33 45 459 bzw. die US-4,288,965 offenbaren zur Durchführung des Form-Fill-Seal-Verfahrens geeignete Vorrichtungen.

Für die vorliegende Erfindung spielt es keine Rolle, ob die Querschweißnähte kontinuierlich, d.h. bei einem kontinuierlich abgezogenen Folienmaterial hergestellt werden, oder aber die Zuführbewegung beim Herstellen der Querschweißnähte zum Stoppen gebracht wird. Bei einem kontinuierlichen Verfahren werden die die Querschweißnähte bildenden Schweißeinrichtungen in Zuführrichtung des Schlauches zyklisch mitbewegt.

Die vorliegende Erfindung will ein Verfahren zum Herstellen eines Schlauchbeutels angeben, der sich insbesondere nach Öffnen auch als hinreichend formstabiles Behältnis zur Aufnahme des Schüttgutes eignet. Im Falle von Lebensmitteln soll die Möglichkeit geschaffen werden, den geöffneten Beutel als Darreichungsbehältnis verwenden zu können, welches hinreichend stabil ist.

Zur Lösung dieses Problems wird mit der vorliegenden Erfindung ein Verfahren mit den Merkmalen von Anspruch 1 vorgeschlagen. Dieses unterscheidet sich gegenüber dem gattungsbildenden Stand der Technik dadurch, dass die Folie eine passive Lage umfasst, die mit der wärmeschrumpfbaren Lage verbunden ist, dass der wärmeschrumpfbaren Lage ein mikrowellenempfindlicher Werkstoff zugeordnet ist, und dass die wärmeschrumpfbare Lage bei Mikrowellenbeaufschlagung im Bereich des mikrowellenempfindlichen Werkstoffes umgeformt wird. Als wärmeschrumpfbare Lage wird insbesondere ein gereckter Thermoplast angesehen, der eingefrorene Orientierungen aufweist. Der mikrowellenempfindliche Werkstoff ist derart ausgelegt, dass er sich bei Mikrowellenbeaufschlagung erwärmt. Die wärmeschrumpfbare Lage der Folie und der mikrowellenempfindliche Werkstoff sind so aufeinander abgestimmt, dass die Erwärmung des mikrowellenempfindlichen Werkstoffs zu einer Rückstellung eingefrorener Orientierungen führt, ohne dass die Folie aufschmilzt, jedoch zu einem solchen Grad, dass sich die Folie vorzugsweise makroskopisch verformt und versteift wird. Die Mikrowellenbeaufschlagung führt dementsprechend dazu, dass die wärmeschrumpfbare Lage der Folie im Bereich des mikrowellenempfindlichen Werkstoffs umgeformt wird. Der Schrumpf der Lage der Folie führt zu einer Verspannung der gesamten Folie und somit zu einer Versteifung derselben.

Die bei dem erfindungsgemäßen Verfahren zur Anwendung kommende Folie ist eine mehrlagige Folie, die neben der wärmeschrumpfbaren Lage eine passive Lage umfasst. Diese passive Lage dient beispielsweise der Versteifung der Folie. Es können weitere passive Lagen vorgesehen sein, und zwar insbesondere, um den sonstigen Anforderungen der Folie gerecht zu werden, die z.B. an eine lebensmittelgerechte Verpackung gestellt werden. Hierzu zählen Feuchtigkeitsschutz, UV-Schutz und mechanischer Schutz, um nur einige Beispiele zu nennen.

Die passive Lage ist im Wesentlichen thermostabil, d.h. wird bei der zu erwartenden Erwärmung des mikrowellenempfindlichen Werkstoffs jedenfalls nicht in einem Maße wie die wärmeschrumpfbare Lage verformt. Bei dieser Sichtweise wird davon ausgegangen, dass sämtliche heutzutage zur Anwendung kommende Folien für Verpackungszwecke auch eingefrorene Orientierungen umfassen. Bei der vorliegenden Erfindung bildet die wärmeschrumpfbare Lage allerdings den Motor für die Umformbewegung, wohingegen die passive Lage zumindest überwiegend einem anderen Zweck dient. Die passive Lage kann das Substrat für den mikrowellenempfindlichen Werkstoff bilden. Sie ist vorzugsweise mit der wärmeschrumpfbaren Lage verklebt und kann entsprechende Haftvermittler tragen, wie beispielsweise Siegellacke oder Kaschierkleber. Die passive Lage kann beispielsweise durch CPET oder anderen im Wesentlichen nicht schrumpfenden Kunststoffen gebildet sein. Denkbar ist auch die Verwendung von Papier bzw. Karton. Auf die Einzelheiten der bei dem Verfahren vorzugsweise zur Anwendung kommenden Folie wird nachfolgend noch näher eingegangen werden.

Bei dem erfindungsgemäßen Verfahren zur Herstellung eines Schlauchbeutels wird die wärmeschrumpfbare Lage, der mikrowellenempfindliche Werkstoff sowie die vorgesehene und mit der wärmeschrumpfbaren Lage verbundene passive Lage der Folie vorzugsweise so vorgesehen, dass bei Mikrowellenbeaufschlagung durch die wärmeschrumpfbare Lage ein Linienmuster ausgebildet wird. Diese Linien des Linienmusters können geradlinig oder gekrümmt ausgebildet sein. Bei einem geradlinigen Verlauf können Liniensegmente gezackt also alternierend ausgerichtet vorgesehen sein, so dass die gewünschte durch Umformung erzielte Versteifung der Folie durch Mikrowellenbehandlung im Bereich der Linie zusätzlich erhöht wird. Durch das Linienmuster können bestimmte Flächenabschnitte an der Folie ausgebildet bzw. voneinander getrennt werden, die nach Mikrowellenbehandlung durch eine Schrumpfung gegeneinander verschwenkt oder gekrümmt sind. Diese Schrumpfung kann ein Gelenk oder eine Versteifung ausbilden. Der durch Mikrowellenbehandlung umgeformte Bereich der Folie bildet eine Diskontinuität, die bei der Verpackungsgestaltung genutzt werden kann, um den mikrowellenbehandelten Schlauchbeutel an die gewünschte Nutzung anzupassen. Speziell kann durch die umgeformten Bereiche der Folie eine Versteifung des Schlauchbeutels erzielt werden, so dass dieser eine gewisse erhöhte Standfestigkeit erhält. Auch können durch Mikrowellenbeaufschlagung umformende Laschen geformt werden, die zu einer Öffnung der Verpackung oder einer gezielten Anlage eines sich durch die Beaufschlagung erwärmenden Teils der Verpackung um das verpackte Gut führen.

Die wärmeschrumpfbare Lage, der mikrowellenempfindliche Werkstoff sowie die mit der wärmeschrumpfbaren Lage verbundene passive Lage der Folie können so vorgesehen sein, dass eine Mikrowellenbeaufschlagung durch die wärmeschrumpfbare Lage das Linienmuster mit im Wesentlichen geraden Linien an dem Schlauchbeutel vorgesehen wird. Durch diese parallelen Linien können sich parallel zueinander erstreckende Rippen ausgebildet werden, durch die beispielsweise benachbarte Seitenflächen eines geöffneten Beutels, die in Umfangsrichtung des geöffneten Beutels nebeneinander angeordnet sind, gegeneinander versteift sind. Die entsprechend an den Linien umgeformten Bereiche bilden Rippen aus, die ein Aufstellen des geöffneten Schlauchbeutels erlauben. Dabei sollten die Linien vorzugsweise parallel zueinander vorgesehen sein, was die Möglichkeit offen lässt, durch die Linien jeweils sich in der Vertikalen erstreckende Stützen auszubilden, die den geöffneten Schlauchbeutel halten, so dass dieser als Darreichungsbehälter genutzt werden kann, der für die Gebrauchszwecke eine hinreichende Steifigkeit hat.

Bei dem Form-Fill-Seal-Verfahren werden die einzelnen Linien des Linienmusters vorzugsweise im Wesentlichen quer zu der Längsschweißnaht vorgesehen, und zwar derart, dass die jeweiligen Linien auf den Umfang des Beutels verteilt angeordnet sind. Hierdurch ergibt sich eine in Umfangsrichtung des Beutels gleichmäßige Abstützung, so dass der Beutel nach Mikrowellenbeaufschlagung einen im Wesentlichen zylindrischen Behälter ausbilden kann. Die Anordnung der Linien des Linienmusters quer zu der Längsschweißnaht bietet den weiteren Vorteil, dass auch die für sich bereits steifen Querschweißnähte zur Versteifung des Beutels nach Öffnen genutzt werden können. Somit kann die Anzahl der Linien für eine hinreichende Formsteifigkeit des Schlauchbeutels nach Mikrowellenbeaufschlagung verringert werden. Bei der genannten bevorzugten Verfahrensführung sind einzelne Linien des Linienmusters vorzugsweise streng parallel zu den Querschweißnähten vorgesehen, und zwar derart, dass an jedem zu formenden Längenabschnitt in Zuführrichtung des Schlauches mehrere Linien hintereinander angeordnet sind. Die Linien sind dabei in der Regel auf den beiden gegenüberliegenden Seitenwänden des Längenabschnitts angeordnet.

Bei einer alternativen Ausgestaltung sind die Linien des Linienmusters im Wesentlichen parallel zu der Längsschweißnaht vorgesehen. Eine solche Ausgestaltung ist relativ kostengünstig herzustellen und ermöglicht es, den Boden durch eine der Querschweißnähte beispielsweise durch Faltung der Querschweißnaht auszubilden. Die Längsschweißnaht und die Linien des Linienmusters bilden nach Mikrowellenbeaufschlagung versteifende Rippen aus, so dass der beispielsweise kurz unterhalb der gegenüberliegenden Querschweißnaht durch Schneiden geöffnete Beutel einen formstabilen Behälter ausbildet. Als im Wesentlichen "parallel" im Sinne der Erfindung werden auch solche Ausgestaltungen angesehen, bei denen die Linien leicht schräg zueinander angeordnet sind. Gedacht ist hier insbesondere die Ausrichtung der Linien im Wesentlichen parallel zueinander als sich im Wesentlichen vertikal erstreckende Stützen eines geöffneten, aufrechtstehenden Beutels.

Vorzugsweise wird bei dem Verfahren der Beutel mit einem besonderen Boden ausgebildet, der für sich eine hinreichende Standfläche und -festigkeit gewährleisten sollte. Dementsprechend werden an gegenüberliebenden Enden einer Seitenwand, die üblicherweise den Bodenabschnitt des stehenden, geöffneten Beutels bildet, jeweils ein Zipfel geformt. Jeder Zipfel umfasst mehrere, üblicherweise zwei Folienlagen, die gegeneinander gelegt und miteinander verbunden sind. Die Zipfel werden dementsprechend durch Falten des Folienmaterials am Ende der entsprechenden Seitenwand gebildet. Eine zur Verfahrensführung insofern geeignete Vorrichtung ist beispielsweise aus der DE 199 57 891 bekannt. Hier werden die entsprechenden Folienlagen durch Verschweißen miteinander verbunden. Die Zipfel verlaufen aus ökonomischen Gründen üblicherweise parallel zu der Zuführrichtung des Schlauches beim Befüllen desselben. Regelmäßig werden die Zipfel im Bereich eines Füllrohres ausgebildet, welches eine gewisse Form für den Längenabschnitt der Folienbahn vorgibt und das Ausbilden der Zipfel vereinfacht. Es können auf dem Umfang des Längenabschnitts zwei oder mehr Zipfel ausgebildet werden. Vorzugsweise wird auf die Anordnung des mikrowellenempfindlichen Werkstoffs an dem Bodenabschnitt, d.h. der Seitenwand, die sich zwischen den Zipfeln befindet, verzichtet. Das zwischen den Zipfeln bezeichnete Bodenabschnitt ist ein Wandabschnitt, der von den Zipfeln üblicherweise überragt wird. Die benachbart zu dem Bodenabschnitt vorgesehenen Seitenwände des Schlauchbeutels werden üblicherweise durch die Zipfel ein wenig verlängert.

Gemäß einer bevorzugten Weiterbildung der vorliegenden Erfindung wird die Längsschweißnaht gegenüberliegend dem Bodenabschnitt ausgebildet. Der Schlauchbeutel wird dementsprechend mit im Wesentlichen dreieckiger Grundfläche ausgeformt. Maßgeblich für diese Sichtweise ist eine Schnittansicht quer zur Zuführrichtung des Folienmaterials beispielsweise auf Höhe eines Füllrohres zum Einfüllen des Schüttgutes. Vorzugsweise wird der mikrowellenempfindliche Werkstoff nicht im Bereich des Bodenabschnitts ausgebildet, wohl aber vorzugsweise in Form eines Musters im Wesentlichen über den gesamten, bis zu der Spitze des Beutels reichenden Wandabschnitt. Dadurch ist ein im Querschnitt dreieckiger Schlauchbeutel mit einem durch die Zipfel versteiften Boden gebildet, der an seinen aufeinander zulaufenden Abschnitten mit Mikrowellenbeaufschlagung versteifbaren Linien versehen ist. Dieser Schlauchbeutel kann im Bereich der Längsschweißnaht aufgeschnitten werden. Die einander gegenüberliegenden Querschweißnähte können nach innen von dem Benutzer nach innen gefaltet werden, um vor der Mikrowellenbehandlung einen hinreichend formstabilen Behälter zu erlangen, der beispielsweise in einen Mikrowellenofen eingebracht werden kann. Nach Mikrowellenbeaufschlagung versteifen die Linien des Linienmusters die Seitenwände des oben offenen Behälters.

Alternativ kann sich die Längsschweißnaht an einer beliebigen Stelle an der Seitenwand des Beutels befinden. Der Boden des Beutels kann beispielsweise durch Faltung des den Beutel bildenden Folienmaterials durch Einblasen von Schutzgas nach Befüllen des Beutels erstellt werden. Diese Faltbearbeitung dient insbesondere dem Ziel, einen im Querschnitt dreieckigen gefalteten Boden an dem Beutel auszubilden. Der Boden kann durch die Faltung bereits hinreichend formstabil sein. Alternativ können linienförmige Versteifungen durch das wärmeempfindliche Material an dem Boden des Beutels ausgebildet werden. Hierzu sind vorzugsweise sich zwischen den Querschweißnähten befindliche und sich im Wesentlichen quer zur Verbindungslinie der gegenüberliegenden Querschweißnähte erstreckende Linien des mikrowellenempfindlichen Werkstoffs an dem Boden vorgesehen. Diese Linien erstrecken sich im Wesentlichen parallel zueinander.

Insbesondere zur Herstellung von Schlauchbeutels für die Lebensmittelverpackung ist es zu bevorzugen, den mikrowellenempfindlichen Werkstoff zwischen der wärmeschrumpfbaren Lage und der passiven Lage anzuordnen, der mikrowellenempfindliche Werkstoff gekapselt ist und nicht direkt mit dem Nahrungsmittel in Verbindung kommt. Weiterhin besonders bevorzugt sollte bei der Herstellung von Schlauchbeuteln für die Lebensmittelverpackung eine wenigstens dreilagige Folie verwendet werden. Die mittlere Lage der Folie wird vorzugsweise durch die wärmeschrumpfbare Lage gebildet. Die äußeren Lagen durch ein Material, welches das verpackte Lebensmittel bestmöglich schützen. Hierzu zählt insbesondere PET; abhängig von den konkreten Anforderungen kann amorphes Polyethylenterephthalat oder stark kristallines Polyethylenterephthalat, insbesondere CPET zur Anwendung kommen.

Zur bestmöglichen Versteifung des Schlauchbeutels ist es weiterhin zu bevorzugen, die wärmeschrumpfbare Folie so zu verwenden, dass die durch Recken eingebrachten Orientierungen quer zu der oder den Linien insbesondere dem Liniemuster verlaufen. Bei der üblichen Ausrichtung der Linien des Linienmusters parallel zu den Querschweißnähten bedeutet dies, dass die Folie in Reckrichtung durch Querschweißnähte zu geschlossenen Längenabschnitten geformt und durch Trennen zu einem geschlossenen Schlauchbeutel verarbeitet werden sollte.

Mit der vorliegenden Erfindung wird ferner eine Folie angegeben, die sich insbesondere zur Herstellung von Schlauchbeuteln der vorerwähnten Art eignet. Die Folie kann aber auch in anderen sehr unterschiedlichen Bereichen zur Anwendung kommen, beispielsweise zur Herstellung von Dekorationsartikeln. Die mit der Verwendung der vorliegenden Erfindung angegebenen Folie zur Herstellung von Artikeln ist nicht auf das Gebiet der Verpackungstechnik beschränkt. Als Folie im Sinne der vorliegenden Erfindung wird jedes im Wesentlichen zweilagiges Material bezeichnet, welches eine wärmeschrumpfbare Lage, die vorzugsweise durch einen Thermoplasten gebildet wird, und eine passive Lage umfasst. Die passive Lage kann aus einem Thermoplasten gebildet sein. Ebensogut kann die passive Lage aus jedem anderen flächigen Material gebildet sein. Geeignet sind insbesondere Papier und Pappe. Entsprechend umfasst der Begriff "Folie" im Sinne der vorliegenden Erfindung auch zweidimensionale Materialien, die eine relativ große Dicke haben. Die vorliegende Erfindung will eine Folie angeben, die sich durch Mikrowellenbeaufschlagung umformen lässt und nach entsprechender Beaufschlagung einen hinreichend formstabilen vorzugsweise dreidimensionalen Zustand einnimmt, so dass Verpackungen oder andere Artikel in der gewünschten Form herstellbar sind.

Bei der Herstellung der Folie können Techniken und Materialien zur Anwendung kommen, wie sie in der WO 0037543 beschrieben sind.

Im Hinblick auf dieses Problem wird mit der vorliegenden Erfindung eine Folie mit den Merkmalen des Anspruchs 14 vorgeschlagen, die eine wärmeschrumpfbare Lage sowie eine passive Lage umfasst. Die passive Lage ist mit der wärmeschrumpfbaren Lage verbunden. Der wärmeschrumpfbaren Lage ist ein mikrowellenempfindlicher Werkstoff zugeordnet. Der mikrowellenempfindliche Werkstoff und die schrumpfbare Lage sind so aufeinander abgestimmt, dass bei Mikrowellenbehandlung die wärmeschrumpfbare Lage erwärmt wird und in der wärmeschrumpfbaren Lage eingefrorene Orientierungen der Moleküle sich zurückstellen. Der mikrowellenempfindliche Werkstoff ist so ausgewählt, dass bei der üblichen Mikrowellenbeaufschlagung eine Erwärmung des mikrowellenempfindlichen Werkstoffs erfolgt, die zu der gewünschten Rückstellung der Orientierungen führt. Die wärmeschrumpfbare Lage, die passive Lage sowie der mikrowellenempfindliche Werkstoff sind so bei der erfindungsgemäßen Folie vorgesehen, dass die Folie bei Mikrowellenbeaufschlagung in vorbestimmter Form umgeformt wird. Hierzu sind mehrere nebengeordnete Weiterbildungen denkbar.

So kann z.B. der mikrowellenempfindliche Werkstoff punktuell oder linienförmig vorgesehen sein, d.h. die flächenmäßige Überdeckung zwischen dem mikrowellenempfindlichen Werkstoff und der wärmeschrumpfbaren Lage kann gering sein. Die wärmeschrumpfbare Lage ist hierbei mit der passiven Lage über einen Kleber so verbunden, dass bei Mikrowellenbeaufschlagung im Bereich des empfindlichen Werkstoffs die wärmeschrumpfbare Lage verformt wird. Im Bereich der Verformung ist zumindest nach Mikrowellenbeanspruchung keine Verklebung aktiv. Das bedeutet, dass die Verklebung im Bereich der Verformung nach Mikrowellenbeaufschlagung nicht mehr vorgesehen ist. Erreicht werden kann dies beispielsweise dadurch, dass Kleber bewusst im Bereich des mikrowellenempfindlichen Werkstoffs ausgespart wird, d.h. die passive Lage jedenfalls so weit gegenüber der wärmeschrumpfbaren Lage beabstandet wird, dass keine Verklebung in dem Bereich von vorneherein stattfindet. Dazu kann die Oberfläche der den Kleber tragenden Folie vor dem Auftragen oder nach dem vollflächigen Auftragen des Klebers bearbeitet, insbesondere ausgeschnitten werden. Alternativ kann der Kleber auch ein wärmeschrumpfbarer Kleber sein, der bei Mikrowellenbeanspruchung durch die Erwärmung des mikrowellenempfindlichen Werkstoffs seine klebenden Eigenschaften verliert. Alternativ kann im Bereich des wärmeempfindlichen Werkstoffs zwischen diesem und der passiven Lage eine Antihaftbeschichtung vorgesehen sein, die trotz flächig aufgebrachtem Kleber ein Verkleben der beiden Lagen verhindert. Schließlich kann die Verklebung zwischen der wärmeschrumpfbaren Lage und der passiven Lage im Bereich des mikrowellenempfindlichen Werkstoffs von vorneherein fehlen.

Sämtliche der vorerwähnten Maßnahmen führen zu einer hohen relativen Beweglichkeit zwischen der schrumpfbaren Lagen und der passiven Lage. Die schrumpfbare Lage kann durch Mikrowellenbeaufschlagung erwärmt und damit durch Rückstellen der Orientierungen in einem Bereich geschrumpft werden, in dem der mikrowellenempfindliche Werkstoff vorgesehen ist. Diese Schrumpfung wird nicht durch anhaftendes passives Material behindert. Das passive Material kann sich hierbei beispielsweise aufwölben und aus der Ebene der Folie heraustreten und somit eine Art Gelenk bilden.

Gemäß einer bevorzugten Weiterbildung der Erfindung ist die flächenmäßige Überdeckung zwischen dem mikrowellenempfindlichen Werkstoff und der schrumpfbaren Folie wie zuvor dargelegt gering. Des Weiteren ist bei dieser bevorzugten Ausgestaltung die flächenmäßige Überdeckung eines die wärmeschrumpfbare Lage mit der passiven Lage verbindenden Klebers gering, so dass sich ein Klebemuster ergibt. Dieses Klebemuster muss nicht dem Muster des der wärmeschrumpfbaren Lage zugeordneten mikrowellenempfindlichen Werkstoffs entsprechen. Die entsprechenden Muster können vorzugsweise sich im Wesentlichen kreuzende Linien umfassen, so dass sich nach Mikrowellenbeaufschlagung eine komplexe Verformung ergibt, die einerseits durch die Verklebung zwischen der passiven Lage und der wärmeschrumpfbaren Lage in Form gehalten wird und andererseits durch den Schrumpf der wärmeschrumpfbaren Lage im Bereich des mikrowellenempfindlichen Werkstoffs.

Gemäß einer weiteren bevorzugten Ausgestaltung der vorliegenden Erfindung ist der mikrowellenempfindliche Werkstoff im Wesentlichen vollflächig zwischen den beiden Lagen, d.h. der passiven Lage und der wärmeschrumpfbaren Lage vorgesehen. Als im Wesentlichen vollflächige Anordnung des mikrowellenempfindlichen Werkstoffs wird vorzugsweise eine flächenmäßige Überdeckung von wenigstens 95, besonders bevorzugt von wenigstens 99 % der verfügbaren Kontaktfläche angesehen. Die Umformung in vorbestimmter Weise aufgrund von Mikrowellenbeaufschlagung wird dadurch erreicht, dass der die wärmeschrumpfbare Lage mit der passiven Lage verbindende Kleber in einem Klebemuster mit geringer flächenmäßiger Überdeckung zwischen den beiden Lagen vorgesehen ist. Bei Mikrowellenbeaufschlagung verhindert die Verklebung zwischen der passiven Lage und der wärmeschrumpfbaren Lage eine Schrumpfbewegung der Folie. Die eingefrorenen Orientierungen möchten sich zwar bei Mikrowellenbeaufschlagung zurückstellen. Sie werden aber aufgrund der Verklebung und durch die Formsteifigkeit der passiven Lage daran gehindert. Ein Schrumpf ergibt sich lediglich dort, wo aufgrund des Klebemusters Kleber fehlt. Das Klebemuster dient dementsprechend zur Einstellung vorbestimmter Bereiche, in denen die Folie bei Mikrowellenbeaufschlagung umgeformt wird. Bei dieser bevorzugten Ausgestaltung wird als passive Lage ein Werkstoff verwendet, der eine hinreichende Steifigkeit hat, so dass die induzierte Rückstellung der Moleküle der wärmeschrumpfbaren Lage nicht zu einer substantiellen Schrumpfung der Folie insgesamt führt.

Es bestehen verschiedene Möglichkeiten, das Klebemuster auszubilden. So kann der Kleber vollflächig auf eine der Lagen aufgebracht werden und klebefreie Bereiche des Klebemusters durch Ausschneiden von Flächensegmenten aus der entsprechenden Lage ausgebildet sein. Alternativ kann die als Substrat für den Kleber dienende Lage zuvor zur Ausbildung der klebefreien Bereiche des Klebemusters ausgeschnitten werden. Erst dann wird der Kleber auf die entsprechende Lage aufgebracht. Alternativ kann der Kleber auch zunächst vollflächig auf eine das Substrat bildende Lage der Folie aufgebracht sein und zur Ausbildung der klebefreien Bereiche des Klebemusters auf den Kleber eine Antihaftbeschichtung entsprechend dem Klebemuster aufgebracht sein. Des Weiteren kann alternativ auch das Klebemuster auf eine der Lagen der Folie in einer dem Klebemuster entsprechenden Weise aufgedruckt sein.

Die erfindungsgemäße Ausgestaltung bietet darüber hinaus den Vorteil, dass bei einer Mikrowellenbehandlung die Erwärmung des mikrowellenempfindlichen Werkstoffs zu Behandlung des verpackten Gutes, insbesondere eines Lebensmittels genutzt werden kann. So kann das Lebensmittel beispielsweise durch die sich einstellende Erwärmung gebräunt werden. Bei einer aromadichten Verpackung unter Verwendung der erfindungsgemäßen Folie ergibt sich dabei mitunter das Problem, dass sich durch die Erwärmung das in der Verpackung eingeschlossene Gas ausdehnt. Mitunter werden durch die Erwärmung des in der Verpackung aufgenommenen Gutes auch Dämpfe erzeugt. Dementsprechend besteht bei der Verwendung der erfindungsgemäßen Folie zur Herstellung einer Verpackung die Möglichkeit, die Folie zur Ausbildung von Funktionselementen zu benutzen, die im Ausgangszustand die Verpackung aromadicht verschließen und welche sich bei Mikrowellenbehandlung öffnen. So kann ein wärmeempfindlicher Kleber einem mikrowellenempfindlichen Werkstoff zugeordnet sein. Der Kleber hält das Funktionselement zunächst an der Verpackung und dichtet das Funktionselement gegenüber der Verpackung ab. Bei einer Mikrowellenbeaufschlagung erwärmt sich der dem Kleber zugeordnete mikrowellenempfindliche Werkstoff, so dass der wärmeempfindliche Kleber seine haftenden Eigenschaften verliert. Das Funktionselement kann durch Verwendung der erfindungsgemäßen Folie dabei plastisch verformt werden, um sich beispielsweise von der Verpackung abzuheben. Auf diese Weise können bei Mikrowellenbehandlung selbstständig öffnende Laschen ausgebildet sein.

Des Weiteren kann der vorerwähnte Effekt einer lokalen Erwärmung der Folie dort, wo sich mikrowellenempfindlicher Werkstoff befindet, genutzt werden, um Wärme in das verpackte Gut an speziellen Stellen einzutragen. So beispielsweise bei einer Strudelverpackung, bei welcher bis zu dem Strudel reichende und an dem Strudel anliegende Lappen aus der Folie in den von der Verpackung aufgenommenen Innenraum hineinreichen. Diese Lappen können zu einer entsprechenden Erwärmung des verpackten Gutes führen. Ebenso ist es denkbar, die vorerwähnte Lasche als entsprechenden Lappen auszubilden. Bei einer Mikrowellenbehandlung öffnet sich die Laschen zunächst. Sie verstellt sich danach, vorzugsweise inwärtig in Richtung auf das verpackte Gut hin,legt sich dort beispielsweise an die Außenfläche des Gutes an und führt an dieser Außenfläche zu einer Erwärmung. Bestimmte lokale Bereiche der Außenfläche des zu erwärmenden Gutes können hierbei bevorzugt erwärmt werden. Auch ist es möglich, bestimmte Teile der Verpackung beim Ausbilden des verpackten Gutes in dieses einzubringen. So kann beispielsweise ein Teigballen um eine von der Innenseite der Verpackung abstehende und über Mikrowellenbehandlung erwärmbare Lasche geformt werden.

Die erfindungsgemäße Folie eignet sich beispielsweise auch als oberste Lage einer sogenannten Blisterverpackung, die üblicherweise auf den Rand einer tiefgezogenen Kunststoffwanne aufgebracht wird. Die Wanne kann beispielsweise Lebensmittel enthalten. Denkbar sind aber auch andere Verbrauchsgüter, wie beispielsweise Zahnbürsten. Auch bei dieser denkbaren Anwendung ist die Folie über einen wärmeempfindlichen Kleber oder einen Siegellack mit der Wanne verbunden, der bei Mikrowellenbeaufschlagung erweicht. Bei Mikrowellenbeaufschlagung führt die Verformung der Folie dazu, dass sich diese zunächst nach oben von der Verpackung abstellt und das zunächst geöffnete freie Ende der Folie in Abziehrichtung umgeschlagen wird, so dass sich letztendlich auf der Außenseite der Folie eine Rolle aus dem Folienmaterial ergibt. Ein Ende der Folie kann beispielsweise mit einem wärmeunempfindlichen Kleber verbunden sein, so dass die aufgerollte Folie nach dem Öffnen Teil der Blisterverpackung bleibt und mit dieser entsorgt werden kann.

Weitere bevorzugte Ausgestaltungen der erfindungsgemäßen Folie sind in den Unteransprüchen angegeben. Die Folie kann insbesondere zwei wärmeschrumpfbare Lagen unterschiedlicher Schrumpfrichtung enthalten. Durch die mehraxiale Verschrumpfung der Folie nach Mikrowellenbeaufschlagung können besonders steife Bereiche erzeugt werden. Auch können zwei schrumpfbare Lagen mit im Wesentlichen gleicher Schrumpfrichtung vorzugsweise nebeneinander und unter Einschluss des mikrowellenempfindlichen Werkstoffs vorgesehen sein. Insbesondere bei einer hierzu symmetrischen Anordnung weiterer Lagen, insbesondere passiver Lagen an der Außenseite der Folie besteht hierdurch die Möglichkeit, im Bereich des mikrowellenempfindlichen Werkstoffs durch Mikrowellenbeaufschlagung eine Schrumpfung zu erzeugen, die zu einer gleichmäßigen Zugbeanspruchung führt. Dem gegenüber führt eine nicht symmetrische Anordnung der wärmeschrumpfbaren Lage innerhalb der Folie in Querschnittsrichtung in der Regel dazu, dass sich die Folie wölbt, jedenfalls bei relativ dicken Lagen, insbesondere relativ dicken passiven Lagen der Folie. Auch eine solche Wirkung kann indes genutzt werden, um spezielle Effekte bei der Mikrowellenbeaufschlagung zu erreichen. So können beispielsweise bei der Verpackung von Lebensmitteln sich bei Mikrowellenbeaufschlagung öffnende Laschen oder andere durch Mikrowellenbeaufschlagung aktivierbare Funktionselemente ausgeformt werden.

Das Klebemuster kann ferner dadurch gebildet werden, dass die passive Lage durch Flächenelemente gebildet ist, die vollflächig mit Kleber versehen und auf die wärmeschrumpfbare Lage aufgeklebt sind. Diese Flächenelemente sind allerdings zur Ausbildung der klebefreien Bereiche des Klebemusters mit Abstand zueinander auf die wärmeschrumpfbare Folie aufgeklebt. Dementsprechend ergibt sich eine Verformung lediglich zwischen den entsprechenden Flächenelementen. Als Flächenelemente in diesem Sinne sind insbesondere ausgeschnittene Stücke der passiven Lage zu verstehen, die nach Art von Patchwork auf die wärmeschrumpfbare Lage aufgeklebt sind.

Mit der vorliegenden Erfindung wird ferner ein Schlauchbeutel mit den merkmalen des Anspruchs 30 vorgeschlagen, der nach dem erfindungsgemäßen Verfahren hergestellt ist und der an gegenübediegenden Enden Querschweißnähte und eine sich regelmäßig quer hierzu erstreckende Längsschweißnaht umfasst. Erfindungsgemäß hat der Beutel eine den Beutel bildende Folie, die eine wärmeschrumpfbare Lage und mit dieser Lage verbundene passive Lage umfasst, wobei der wärmeschrumpfbaren Lage ein mikrowellenempfindlicher Werkstoff zugeordnet ist, um durch Mikrowellenbeaufschlagung gezielt Rückstellungen der wärmeschrumpfbaren Lage zu erreichen und somit den Beutel in Grenzen relativ formstabil auszubilden. Der erfindungsgemäße Schlauchbeutel macht sind insbesondere eine Folie nach der vorliegenden Erfindung zunutze.

Die vorliegende Erfindung wird nachfolgend anhand von Ausführungsbeispielen in Verbindung mit der Zeichnung näher erläutert. In dieser zeigt:
- Fig. 1: eine perspektivische Seitenansicht des nach dem erfindungsgemäßen Verfahren hergestellten Schlauchbeutels;
- Fig. 2a: eine Seitenansicht des in Fig. 1 gezeigten Ausführungsbeispiels vor dem Öffnen und nach Mikrowellenbeaufschlagung;
- Fig. 2b: das in Fig. 1 und 2 gezeigte Ausführungsbeispiel nach dem Öffnen und nach Mikrowellenbeaufschlagung;
- Fig. 3a: eine Draufsicht auf ein alternatives Ausführungsbeispiel zu dem in den Fig. 1 und 2 gezeigten Ausführungsbeispiel nach dem Öffnen und nach Mikrowellenbeaufschlagung;
- Fig. 3b: das in Fig. 3a gezeigte Ausführungsbeispiel von der Unterseite;
- Fig. 3c: eine Querschnittsansicht quer zur Zuführrichtung des Schlauchmaterials des in den Fig. 3a und 3b gezeigten Ausführungsbeispiels;
- Fig. 4: eine schematische Schnittansicht durch ein erstes Ausführungsbeispiel einer erfindungsgemäßen Folie;
- Fig. 5a: eine Schnittansicht durch ein zweites Ausführungsbeispiel einer erfindungsgemäßen Folie vor Mikrowellenbeaufschlagung;
- Fig. 5b: das in Fig. 4a gezeigte Ausführungsbeispiel nach Mikrowellenbeaufschlagung;
- Fig. 6a: ein drittes Ausführungsbeispiel einer erfindungsgemäßen Folie vor Mikrowellenbeaufschlagung;
- Fig. 6b: das in Fig. 5a gezeigte Ausführungsbeispiel nach Mikrowellenbeaufschlagung;
- Fig. 7a: eine Schnittansicht durch ein viertes Ausführungsbeispiel einer erfindungsgemäßen Folie vor Mikrowellenbeaufschlagung;
- Fig. 7b: das in Fig. 6a gezeigte Ausführungsbeispiel nach Mikrowellenbeaufschlagung;
- Fig. 8 bis 10: Beispiele für die Seitenwandgestaltung zu dem in Fig. 6a, 6b gezeigten Ausführungsbeispiel;
- Fig. 11 bis 13: Beispiele zu Abwandlungen der in Fig. 6a, 6b gezeigten Gestaltung.

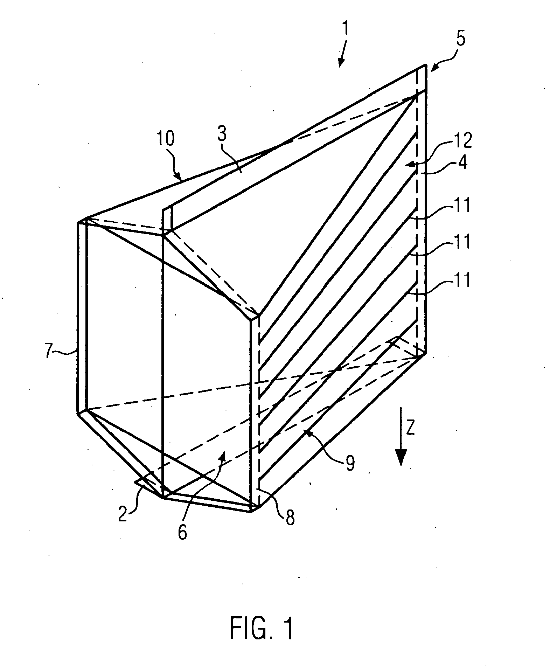

In Fig. 1 ist ein Ausführungsbeispiel eines Schlauchbeutels gezeigt, der mit dem erfindungsgemäßen Verfahren herstellbar ist. Das Verfahren kann wie beispielsweise aus der DE 199 57 891 A1 bekannt durchgeführt werden. Es wird eine zunächst als ebene Bahn zugeführte Folie über eine Formschulter umgeformt, und zwar zu einem in Umfangsrichtung geschlossenen Schlauch. Die umgeformte Endlosbahn wird durch eine Längsschweißnaht in Umfangsrichtung geschlossen. Hierbei kommt üblicherweise eine Längsschweißvorrichtung zum Einsatz, die gegen ein Füllrohr wirkt, welches an seinem oberen Ende die Formschulter ausbilden kann. Danach ist der Schlauch umfänglich geschlossen. Es folgt das Ausbilden einer unteren Querschweißnaht, üblicherweise mit einer Vorrichtung, die auch die obere Querschweißnaht des zuvor gefertigten Beutels bildet und die zwischen den jeweiligen oberen und unteren Schweißbacken üblicherweise eine Schneideinrichtung aufweist, um den beidseitig geschlossenen Schlauchbeutel von dem endlos zugeführten Material abzutrennen. Die Querschweißeinrichtung kann zyklisch hin- und herbewegt werden und somit beim Ausbilden der Schweißnaht kontinuierlich mit der zugeführten Bahn mitlaufen. Alternativ kann die Zuführbewegung auch beim jeweiligen Ausbilden der Querschweißnaht gestoppt werden.

Der in Fig. 1 gezeigte Schlauchbeutel 1 hat dementsprechend eine untere Querschweißnaht 2 und eine obere Querschweißnaht 3. Der Schlauchbeutel 1 hat in der Querschnittsansicht, d.h. in einem Schnitt quer zur Zuführrichtung des Pfeils Z eine im Wesentlichen dreieckige Grundfläche. An der Spitze des Dreiecks befindet sich bei dem gezeigten Ausführungsbeispiel die Längsschweißnaht 4, die sich rechtwinklig zu den beiden Querschweißnähten 2, 3 erstreckt. Gegenüberliegend zu der Längsschweißnaht 4 und damit einer Spitze 5 befindet sich ein Bodenabschnitt 6, der quer zur Zuführrichtung Z durch Zipfel 7, 8 begrenzt wird, die sich von dem Bodenabschnitt 6 zu der Spitze 5 erstreckende Wandabschnitte 9, 10 leicht nach außen über die dreiecksförmige Grundfläche des Schlauchbeutels 1 verlängern. Die Zipfel 7, 8 sind durch doppellagig gelegte Folie gebildet. Im Bereich der Zipfel 7, 8 sind die beiden Folienlagen miteinander verschweißt. Details zu einer entsprechenden Verfahrensführung sind der DE 199 57 891 zu entnehmen. Die Verwirklichung der vorliegenden Erfindung ist allerdings nicht auf das dort beschriebene Ausführungsbeispiel beschränkt.

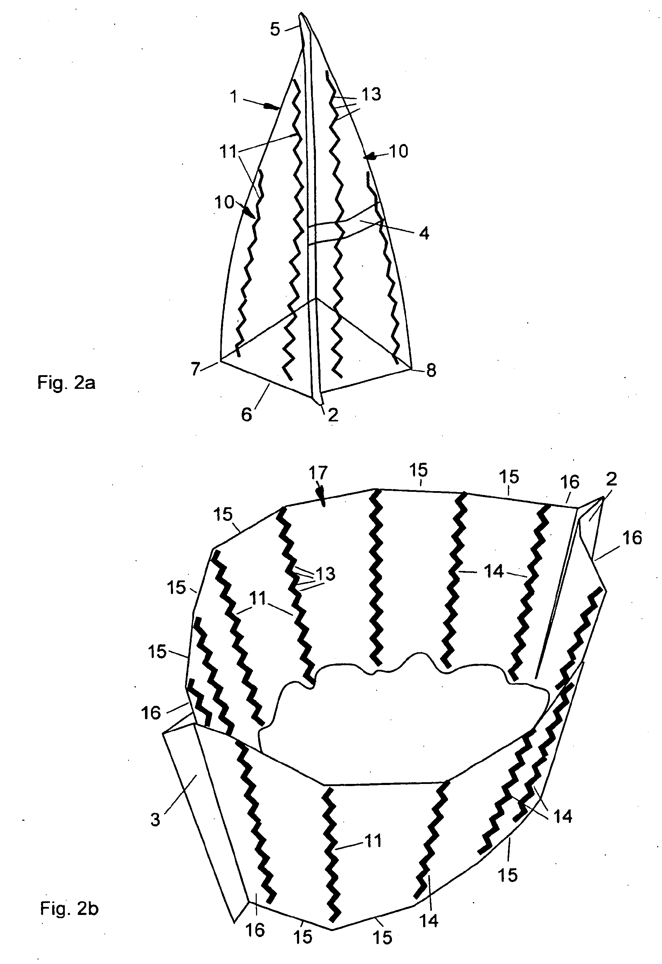

Die bis zu der Spitze 5 reichenden Wandabschnitte 9, 10 haben jeweils sechs Linien 11, die parallel zueinander und parallel zu den Querschweißnähten 2, 3 ausgerichtet sind und ein Linienmuster 12 bilden. Die Linien 11 erstrecken sich von den Zipfeln 7, 8 bis hin in die Spitze 5. Wie deutlicher den Fig. 2a, b zu entnehmen ist, bestehen die Linien 11 jeweils aus alternierenden Linienabschnitten 13. Bezogen auf die Form und Gestaltung des Beutels gemessen an dessen Abmessungen werden diese einzelnen trotz der zick-zack-förmigen Abschnitte 13 Linien 11 jedoch als geradlinige Linien angesehen.

Nach der Durchführung des Form-Fill-Seal-Verfahrens ist der Schlauchbeutel 1 vollständig geschlossen und mit einem versteiften Bodenbereich 6 versehen. Der Beutel kann beispielsweise zur Verpackung von Knabbergebäck benutzt werden. Zur Darreichung des Knabbergebäcks wird der Benutzer den gefüllten Schlauchbeutel zunächst in der in Fig. 2 gezeigten Weise anordnen. Dabei bildet der Bodenbereich 6 die durch die Zipfel 7, 8 verstärkte Standfläche des Schlauchbeutels 1. Die Linien 11 des Linienmusters 12 erstrecken sich nunmehr in der Vertikalen. Die Längsschweißnaht 4 bildet das obere Ende des aufrechtstehenden Schlauchbeutels 1. Der Benutzer wird nunmehr den Schlauchbeutel 1 kurz unterhalb der Längsschweißnaht 4 aufschneiden, d.h. oberseitig öffnen. Die beim Form-Fill-Seal-Verfahren oberen und unteren Querschweißnähte bilden nunmehr seitliche Rippen, die sich parallel zu den Linien 11 des Linienmusters 12 erstrecken, d.h. vertikal ausgerichtet sind. Der aufrechtstehende geöffnete Schlauchbeutel wird nunmehr in einen Mikrowellenofen eingeschoben und in vorbestimmter Weise mittels Mikrowellenbeaufschlagung behandelt. Die Linien 11 des Linienmusters 12 sind in dem gezeigten Ausführungsbeispiel durch einen mikrowellenempfindlichen Werkstoff, beispielsweise einen metallischen Werkstoff gebildet. Der metallische Werkstoff befindet sich vorliegend auf der Außenseite einer mittleren Lage aus Polypropylen, die zwischen zwei Lagen aus Polyethylenterephthalat eingeschlossen ist. Diese dreilagige Folie wird im Form-Fill-Seal-Verfahren verarbeitet. Die drei Lagen werden als miteinander verbundene Lagen in Form der ebenen Bahn in dem Verfahren zugeführt. Die dreilagige Folie kann bedruckt oder anderweitig vorbehandelt sein.

Bei der Mikrowellenbeaufschlagung erwärmt sich der mikrowellenempfindliche Werkstoff. Die schrumpfbare Polypropylen-Lage wird dadurch gleichfalls erwärmt. Die in dem gereckten Polypropylen eingefrorenen Orientierungen werden zurückgestellt. Dementsprechend schrumpft die Folie in vorbestimmter Weise im Bereich der Linien 11. Die äußeren PET-Lagen sind überwiegend mit der PP-Lage verklebt. Eine solche Verklebung fehlt jedoch im Bereich des mikrowellenempfindlichen Werkstoffs, d.h. im Bereich der Linien 11. Dementsprechend kann sich die wärmeschrumpfbare PP-Lage durch Mikrowellenbeaufschlagung zusammenziehen. Die äußeren PET-Lagen wölben sich jeweils nach außen. Es ergeben sich Mikrowellenbeaufschlagung ausgebildete Kanten 14 und dazwischen angeordnete, im Wesentlichen ebene Wandabschnitte 15. Weitere Wandabschnitte 16 sind zwischen einer durch Mikrowellenbeaufschlagung gebildeten Kante 14 und einer der Querschweißnähte 2, 3 vorgesehen. Der dadurch gebildete Behälter 17 ist oben offen und allein durch das Folienmaterial 11 gebildet, welches aber aufgrund der Mikrowellenbeaufschlagung und durch die Querschweißnähte 2, 3 hinreichend versteift ist, so dass der Behälter sich zur Darreichung des in dem Behälter 17 enthaltenen Knabbergebäcks eignet. Geeignet ist auch ein mindestens dreilagiger Aufbau mit jeweils einer PP-Schicht außen und einer PET-Lage dazwischen.

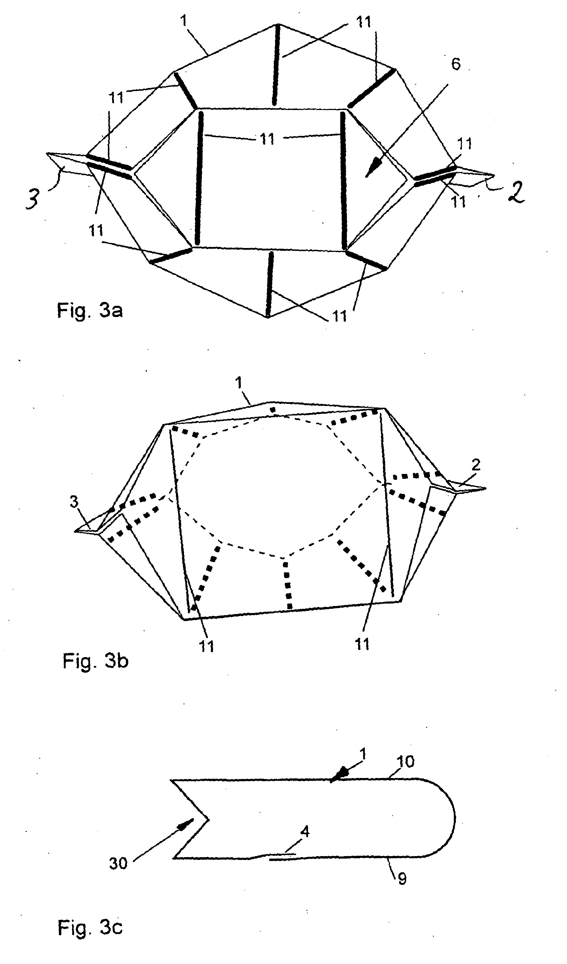

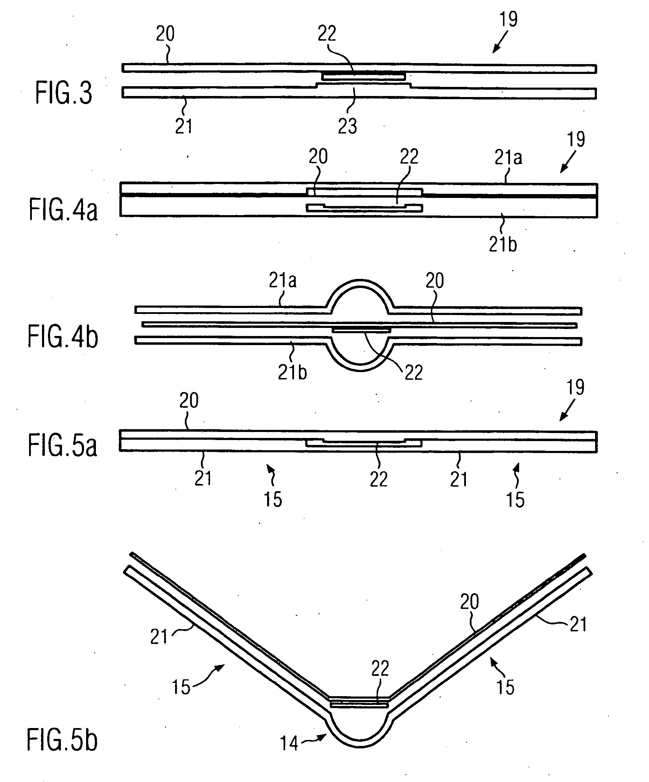

Die Fig. 3a bis 3c zeigen ein alternatives Ausführungsbeispiel eines Beutels 1 ähnlich zu dem in den Fig. 1 und 2 gezeigten Ausführungsbeispiel. Das Ausführungsbeispiel lässt sich einfacher herstellen, da Zipfel fehlen. Der Beutel 1 umfasst lediglich zwei den aufrecht stehenden Beutel 1 in der Vertikalen begrenzende Querschweißnähte 2, 3 sowie eine Längsschweißnaht 4, die sich - vgl. Querschnittsdarstellung in Zuführrichtung des Schlauches in Fig. 3c - auf der Seitenwand 9 befindet. Der Bodenabschnitt 6 weist zwei Linien 11 aus mikrowellenempfindlichem Material auf. Diese bodenseitigen Linien 11 erstrecken sich in etwa zwischen zwei weiteren, an den Seitenwänden 9, 10 vorgesehenen Linien 11. An dem Bodenabschnitt 6 ist durch Einblasen von Schutzgas nach Befüllen des Beutels 1 ein Einschlag 30 mit dreieckigem Querschnitt ausgebildet. An der dem Einschlag 30 gegenüberliegenden Seite können die Seitenwände 9, 10 durch einen Aufreißstreifen miteinander verbunden sein, der beim Herstellen des Beutels in das Folienmaterial eingearbeitet worden ist.

Fig. 3 zeigt eine Schnittansicht eines Ausführungsbeispiel einer Folie 19, die zur Herstellung des in den Fig. 1, 2a, 2b gezeigten Schlauchbeutels 1 verwendet werden kann. Die Folie 19 hat eine wärmeschrumpfbare Lage 20, die mit einer passiven Lage 21 verklebt ist. An vorbestimmter Stelle ist ein wärmeschrumpfbarer Werkstoff 22 vorgesehen, der auch als Suszeptor bezeichnet wird. Der wärmeschrumpfbare Werkstoff 22 ist bei dem gezeigten Ausführungsbeispiel direkt auf die schrumpfbare Lage 20 aufgedruckt. Zwischen dem wärmeschrumpfbaren Werkstoff 22 und der passiven Lage 21 befindet sich eine Antihaftbeschichtung 23, in einer Breite, die in etwa der Abmessung des mikrowellenempfindlichen Werkstoffs 22 entspricht.

In Fig. 4a und 4b ist ein weiteres Ausführungsbeispiel der Folie ebenfalls in der Schnittansicht gezeigt. Auch hier ist eine wärmeschrumpfbare Lage 20 vorgesehen, die mit einer passiven Lage 21 verklebt ist. Die wärmeschrumpfbare Lage 20 befindet sich bei dem gezeigten Ausführungsbeispiel in Fig. 4a, 4b zwischen zwei passiven Lagen 21a, 21 b. Es ist eine im Wesentlichen vollflächige Verlebung zwischen den passiven Lagen 21 und der wärmeschrumpfbaren Lage 20 verwirklicht. Lediglich im Bereich des mikrowellenempfindlichen Werkstoffs 22, der einseitig an der wärmeschrumpfbaren Lage 20 ausgebildet ist, sind beide passiven Lagen 21 a, 21 b nach hinten ausgeschnitten. Dementsprechend ergibt sich ein die wärmeschrumpfbare Lage 20 im Bereich des mikrowellenempfindlichen Werkstoffs 22 einschließender klebefreier Freiraum.

Nach Mikrowellenbeaufschlagung (vgl. Fig. 4b) hat sich die wärmeschrumpfbare Lage zusammengezogen. Bei dem in Fig. 4a, 4b gezeigten Ausführungsbeispiel erstrecken sich die gereckten, bei idealisierter Betrachtung im Wesentlichen parallel zueinander verlaufenden Molekülketten der wärmeschrumpfbaren Lage 20 in Ebenen, die parallel zu der Zeichenebene verlaufen. Dementsprechend ist nach Mikrowellenbeaufschlagung die wärmeschrumpfbare Lage 20 in der Zeichenebene verkürzt. Die passiven Lagen 21 haben sich aufgrund dieser Verkürzung nach außen gewölbt. Da die passiven Lagen 21 a, 21 b die Folie 19 nach Fig. 4a, 4b beidseitig versteifen, ergibt sich eine gleichmäßige Verkürzung der Folie 19.

Dem gegenüber führt bei dem in Fig. 5a, 5b gezeigten Ausführungsbeispiel eine Mikrowellenbeaufschlagung auch zu einer Verformung der Folie 19 derart, dass die zweidimensionale Form verlassen wird. Während in den Fig. 4a, 4b lediglich eine Verkürzung der Folie im Bereich des mikrowellenempfindlichen Werkstoffs 22 bewirkt, führt die Zugbeanspruchung der schrumpfenden Lage 20 bei Mikrowellenbeaufschlagung dazu, dass benachbarte Wandabschnitte 15 der Folie auf der Seite der wärmeschrumpfbaren Lage 20 aufeinander zu geschwenkt werden.

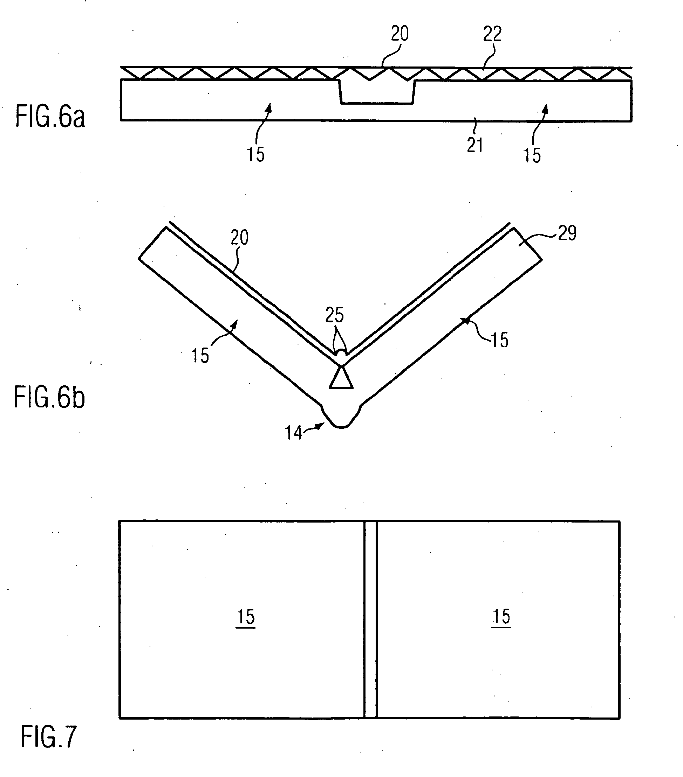

Bei dem in Fig. 6a gezeigten Ausführungsbeispiel wird die passive Lage 21 durch eine Kartonage gebildet, die eine eingeschnittene Nut 24 hat. Die Kartonage 21 und die wärmeschrumpfbare Lage 20 sind fest miteinander verbunden. Lediglich im Bereich der Nut 24 fehlt eine entsprechende Verklebung. Zwischen der passiven Lage 21 und der wärmeschrumpfbaren Lage 20 befindet sich ein vollflächig auf die aktive Lage 20 aufgebrachter mikrowellenempfindlicher Werkstoff 22.

Beim Mikrowellenbeaufschlagung führt dieser Werkstoff 22 zur Rückstellung von Orientierungen. Da allerdings der überwiegende Teil der wärmeschrumpfbaren Lage fest mit der Kartonage 21 verklebt ist, führt eine entsprechende molekulare Reorientierung nicht zur vollflächigen Schrumpfung der wärmeschrumpfbaren Lage 20. Lediglich im Bereich der Nut 24 schrumpft die aktive Lage 20. Die Verkürzung führt dazu, dass die benachbarten Wandabschnitte 15 der Folie 14 verschwenken (vgl. Fig. 6b). Die Verschwenkbewegung endet, wenn äußere Kanten 25 der Kartonage 21 gegeneinander stoßen. Durch angemessene Ausgestaltung der Nut 24 angepasst auf die Dicke der Kartonage 21 kann ein vorbestimmter Verschwenkwinkel eingestellt werden. Dieser Effekt kann beispielsweise genutzt werden, um an Lebensmittelverpackungen bei Mikrowellenbeaufschlagung aufklappende Verschlüsse auszubilden. Diese Verschlüsse können über eine Perforation mit dem Verpackungsmaterial verbunden sein, welche entweder aufgrund der Rückstellbewegung der aktiven Lage 20 oder aber durch den Benutzer vor der Mikrowellenbeaufschlagung aufgerissen wird.

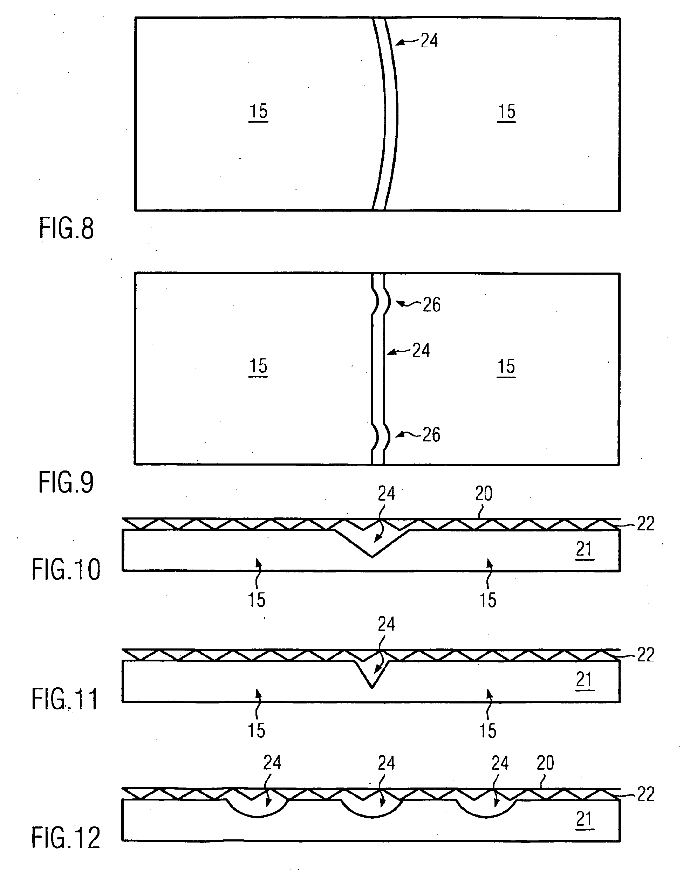

Die Fig. 7 bis 9 zeigen verschiedene Ausformungen der Nut 24 entlang der Seitenwand 9 der Folie, die mit einem Ausschnitt dargestellt ist. Die Nut 24 kann geradlinig verlaufen (Fig. 7). Alternativ kann die Nut 24 auch in ihrer Längsrichtung der Seitenwand 9 gekrümmt ausgebildet sein (vgl. Fig. 8). Ebensogut kann bei ansonsten geradlinigen Verlauf die Nut 24 auch leichte Wölbungen 26 ausbilden (Fig. 9). Insbesondere Abweichungen von der in Fig. 7 gezeigten geradlinigen Ausformung der Nut 24 führen zu einer stärkeren Versteifung der durch Mikrowellenbeaufschlagung behandelten Folie. Des Weiteren erlauben die Ausgestaltungen konkrete Umformwege bei Mikrowellenbeaufschlagung und somit vorbestimmbare Formänderungen des Artikels bei Beaufschlagung mit Mikrowellen.

Fig. 10 bis 12 sind Abwandlungen des in Fig. 6a gezeigten Ausführungsbeispiels. Die Nut 24 hat bei den in den Ausführungsbeispielen der Fig. 10, 11 eine V-förmige Gestaltung. Die Nut 24 bei dem in Fig. 10 gezeigten Ausführungsbeispiel hat einen relativ stumpfen Winkel. Dementsprechend endet die in Fig. 6b verdeutlichte Verschwenkbewegung relativ spät mit dem Aneinanderliegen der zunächst divergierenden Seitenwände der Nut 24. Bei dem in Fig. 11 gezeigten Ausführungsbeispiel endet diese Verschwenkbewegung früher, da die Nut 24 mit spitzem Winkel ausgebildet ist.

Bei der in Fig. 12 gezeigten Abwandlung hat die Nut 24 keinen Grund, sondern ist konkav ausgebildet.

### Bezugszeichenliste

- 1: Schlauchbeutel
- 2: Querschweißnaht
- 3: Querschweißnaht
- 4: Längsschweißnaht
- 5: Spitze
- 6: Bodenabschnitt
- 7: Zipfel
- 8: Zipfel
- 9: Wandabschnitt/Seitenwand
- 10: Wandabschnitt/Seitenwand
- 11: Linien
- 12: Linienmuster
- 13: Abschnitte
- 14: Kante
- 15: Wandabschnitt
- 16: Wandabschnitt
- 17: Behälter
- 19: Folie
- 20: wärmeschrumpfbare Lage
- 21: passive Lage
- 22: mikrowellenempfindlicher Werkstoff
- 23: Antihaftbeschichtung
- 24: Nut
- 25: Kanten
- 26: Wölbung
- 30: Einschlag
- Z: Zuführrichtung

## Patentansprüche

1. Verfahren zum Herstellen eines Schlauchbeutels (1), bei dem zunächst eine ebene Bahn einer Folie (19) umfassend wenigstens eine wärmeschrumpfbare Lage (20) über eine Formschulter geformt und durch eine Längsschweißnaht (4) zu einem Schlauch gebildet wird, die sich in Zuführrichtung (Z) des Schlauches erstreckt, Schüttgut in einen Längenabschnitt des Schlauches eingefüllt und der ober- und unterseitig durch Querschweißnähte (2, 3) geschlossene Längenabschnitt als gefüllter Schlauchbeutel (1) von dem zugeführten Hüllstoff abgetrennt wird,
**dadurch gekennzeichnet,**
**dass** die Folie zusätzlich eine passive Lage (21) umfasst, die mit der wärmeschrumpfbaren Lage (20) verbunden ist;
**dass** der wärmeschrumpfbaren Lage (20) ein bei Mikrowellenbeaufschlagung Wärme abgebender mikrowellenempfindlicher Werkstoff (22) zugeordnet ist, und
**dass** die wärmeschrumpfbare Lage (20), der mikrowellenempfindliche Werkstoff (22) und die passive Lage (21) so miteinander verbunden sind, dass die Folie (19) bei Mikrowellen-beaufschtagung in vorbestimmter Weise umgeformt wird.

2. Verfahren nach Anspruch 1, **dadurch gekennzeichnet, dass** die wärmeschrumpfbare Lage (20), der mikrowellenempfindliche Werkstoff (22) und die mit der wärmeschrumpfbaren Lage (20) verbundene passive Lage (21) der Folie (19) so vorgesehen sind, dass bei Mikrowellenbeaufschlagung durch die wärmeschrumpfbare Lage (20) ein Linienmuster (12) ausgebildet wird.

3. Verfahren nach Anspruch 2, **dadurch gekennzeichnet, dass** die wärmeschrumpfbare Lage (20), der mikrowellenempfindliche Werkstoff (22) und die mit der wärmeschrumpfbaren Lage (20) verbundene passive Lage der Folie (19) so vorgesehen sind, dass bei Mikrowellenbeaufschlagung durch die wärmeschrumpfbare Lage (20) das Linienmuster (12) mit im Wesentlichen geraden Linien (11) an dem Schlauchbeutel (1) vorgesehen wird.

4. Verfahren nach Anspruch 2 oder 3, **dadurch gekennzeichnet, dass** die wärmeschrumpfbare Lage (20), der mikrowellenempfindliche Werkstoff (22) und mit der wärmeschrumpfbaren Lage (20) verbunden Lage der Folie (19) so vorgesehen sind, dass bei Mikrowellenbeaufschlagung durch die wärmeschrumpfbare Lage (20) das Linienmuster (12) mit sich parallel zueinander erstreckenden Linien an dem Hüllstoff vorgesehen werden.

5. Verfahren nach einem der Ansprüche 2 bis 4, **dadurch gekennzeichnet, dass** einzelne Linien (11) des Linienmusters (12) im Wesentlichen parallel zu der Längsschweißnaht (4) so vorgesehen sind, dass die Linien (11) auf dem Umfang des Schlauchbeutels (1) verteilt angeordnet sind.

6. Verfahren nach Anspruch 5, **dadurch gekennzeichnet, dass** einzelne Linie (11) des Linienmusters (12) im Wesentlichen parallel zu der Querschweißnaht (2; 3) so vorgesehen werden, dass an jedem zu formenden Längenabschnitt in Zuführrichtung (Z) des Schlauches mehrere Linien (11) hintereinander angeordnet sind.

7. Verfahren nach Anspruch 6, **dadurch gekennzeichnet, dass** an gegenüberliegenden Enden je einer Seitenwand (9, 10) jeweils ein Zipfel (7, 8) aus mehreren Folienlagen geformt wird und die Folienlagen miteinander verbunden werden.

8. Verfahren nach Anspruch 7, **dadurch gekennzeichnet, dass** an einem zwischen den Seitenwänden (9, 10) befindlichen Bodenabschnitt (6) kein mikrowellenempfindlicher Werkstoff (22) vorgesehen wird.

9. Verfahren nach einem der vorherigen Ansprüche, **dadurch gekennzeichnet, dass** der Schlauch mit einer bei Schnittansicht quer zur Zuführrichtung (Z) der Folie (19) dreieckigen Grundfläche ausgebildet wird, dass die Längsschweißnaht (4) im Bereich einer Spitze (5) dieser Querschnittsform vorgesehen wird und dass das Linienmuster (12) im Wesentlichen über die gesamten, bis zur Spitze (5) reichenden Wandabschnitte (9,10) vorgesehen wird.

10. Verfahren nach einem der Ansprüche 2 bis 9, **dadurch gekennzeichnet, dass** die Linien (11) des Linienmusters (12) durch alternierende Linienabschnitte (13) zusammengesetzt sind.

11. Verfahren nach einem der vorherigen Ansprüche, **dadurch gekennzeichnet, dass** der mikrowellenempfindliche Werkstoff (22) zwischen der wärmeschrumpfbaren Lage (20) und der passiven Lage (21) angeordnet wird.

12. Verfahren nach einem der vorherigen Ansprüche, **dadurch gekennzeichnet, dass** eine wenigstens dreilagige Folie (19) verwendet wird.

13. Verfahren nach einem der vorherigen Ansprüche 2 bis 12, **dadurch gekennzeichnet, dass** in der wärmeschrumpfbaren Lage (20) durch Recken eingebrachte Orientierungen quer zu einzelnen Linien (11) verlaufen.

14. Folie, insbesondere zur Herstellung von Schlauchbeuteln mit einer wärmeschrumpfbaren Lage (20), wobei
die Folie (19) weiterhin einen bei Mikrowellenbeaufschlagung Wärme abgebenden mikrowellenempfindlichen Werkstoff (22), der der wärmeshrumpfbaren Lage (20) zugeordnet ist, umfasst, **dadurch gekennzeichnet, dass** die Folie (19) eine passive Lage (21) umfasst, die mit der wärmeschrumpfbaren Lage (20) verbunden ist, wobei die wärmesc-hrumpfbare Lage (20), der mikrowellenempfindliche Werkstoff (22) und die passive Lage (21) so miteinander verbunden sind, dass die Folie (19) bei Mikrowellenbeaufschlagung im Bereich des mikrowellenempfindlichen Werkstoffes (22) in vorbestimmter Weise umgeformt wird.

15. Folie nach Anspruch 14, **dadurch gekennzeichnet, dass** die flächenmäßige Überdeckung zwischen dem mikrowellenempfindlichen Werkstoff (22) und der wärmeschrumpfbaren Lage (20) gering ist und dass die wärmeschrumpfbare Lage (20) mit der passiven Lage (21) über einen Kleber so verbunden ist, dass bei Mikrowellenbeaufschlagung im Bereich des mikrowellenempfindlichen Werkstoffs (22) die wärmeschrumpfbare Lage (20) verformt wird.

16. Folie nach Anspruch 15, **dadurch gekennzeichnet, dass** im Bereich der Verformung keine Verklebung zwischen den Lagen (20, 21) vorgesehen ist.

17. Folie nach Anspruch 15 oder 16, **dadurch gekennzeichnet, dass** der Kleber ein wärmeempfindlicher Kleber ist, der derart beschaffen ist, dass bei Mikrowellenbeaufschlagung im Bereich des wärmeempfindlichen Werkstoffs (22) die Klebewirkung des wärmeempfindlichen Klebers zwischen der wärmeschrumpfbaren Lage (20) und der passiven Lage (21) verloren geht.

18. Folie nach Anspruch 15 oder 16, **dadurch gekennzeichnet, dass** der mikrowellenempfindliche Werkstoff (22) zwischen der wärmeschrumpfbaren Lage (20) und der passiven Lage (21) vorgesehen ist und dass zwischen dem mikrowellenempfindlichen Werkstoff (22) und der passiven Lage (21) eine Antihaftbeschichtung (23) vorgesehen ist.

19. Folie nach Anspruch 15 oder 16, **dadurch gekennzeichnet, dass** die Verklebung zwischen der wärmeschrumpfbaren Lage (20) und der passiven Lage (21) im Bereich des mikrowellenempfindlichen Werkstoffs (22) fehlt.

20. Folie nach Anspruch 14 oder 15, **dadurch gekennzeichnet, dass** ein die wärmeschrumpfbare Lage (20) mit der passiven Lage (21) verbindender Kleber in einem Klebemuster mit geringer flächenmäßiger Überdeckung zwischen den beiden Lagen (20, 21) vorgesehen ist.

21. Folie nach Anspruch 20 soweit von Anspruch 14 abhängig, **dadurch gekennzeichnet, dass** der mikrowellenempfindliche Werkstoff (22) im Wesentlichen vollflächig zwischen beiden Lagen (20, 21) vorgesehen ist.

22. Folie nach Anspruch 20 oder 21, **dadurch gekennzeichnet, dass** der Kleber auf einer Lage (20; 21) vollflächig aufgebracht ist an deren Oberfläche zur Ausbildung klebefreier Bereiche des Klebemusters durch Wegnehmen von Material der Lage (20, 21) ausgebildet sind.

23. Folie nach Anspruch 20 oder 21, **dadurch gekennzeichnet, dass** der Kleber auf eine Lage (20, 21) vollflächig aufgebracht ist, an der durch Ausschneiden eine dem Klebemuster entsprechende entsprechendes Lochmuster ausgebildet ist.

24. Folie nach Anspruch 20 oder 21, **dadurch gekennzeichnet, dass** der Kleber vollflächig aufgebracht ist und das Klebemuster durch eine zwischen dem Kleber und der benachbarten Lage (21; 22) aufgebrachte Antihaftbeschichtung (23) gebildet ist.

25. Folie nach einem der Ansprüche 21 bis 24, **dadurch gekennzeichnet, dass** das Klebemuster auf eine der Lagen (20, 21) aufgedruckt ist.

26. Folie nach einem der Ansprüche 20 bis 25, **dadurch gekennzeichnet, dass** die passive Lage (21) aus vollflächig mit Kleber versehenen passiven Flächenelementen gebildet ist, die zur Ausbildung klebefreier Bereiche des Klebemusters mit Abstand zueinander auf die wärmeschrumpfbare Lage (20) aufgeklebt sind.

27. Folie nach einem der Ansprüche 14 bis 26, **gekennzeichnet durch** zwei wärmeschrumpfbare Lagen unterschiedlicher Schrumpfrichtung.

28. Folie nach einem der Ansprüche 14 bis 27, **gekennzeichnet durch** zwei schrumpfbare Lagen mit im Wesentlichen gleicher Schrumpfrichtung.

29. Folie nach einem der Ansprüche 14 bis 28, **gekennzeichnet durch** zwei passive Lagen, die jeweils die Außenseite der Folien ausbilden.

30. Schlauchbeutel mit an gegenüberliegenden Enden des Schlauchbeutels (1) vorgesehenen Querschweißnähten (2, 3) und einer sich dazu quer erstreckenden Längsschweißnaht (4), wobei die den Schlauchbeutel (1) bildende Folie (19) eine wärmeschrumpfbare Lage (20) umfasst,
**dadurch gekennzeichnet,**
**dass** die Folie zusätzlich eine passive Lage (21) -umfasst, die mit der wärmeschrumpfbaren Lage (20) verbunden ist;
**dass** der wärmeschrumpfbaren Lage (20) ein bei Mikrowellenbeaufschlagung Wärme abgebender mikrowellenempfindlicher Werkstoff (22) zugeordnet ist, und dass die wärmeschrumpfbare Lage (20), der mikrowellenempfindliche Werkstoff (22) und die passive Lage (21) so miteinander verbunden sind, dass die Folie (19) bei Mikrowellen- beaufschlagung-in vorbestimmter Weise umgeformt wird.

31. Schlauchbeutel nach Anspruch 30, **gekennzeichnet durch** eine Folie nach einem der Ansprüche 14 bis 29.

## Claims

1. Method of manufacturing a tubular bag (1), whereby a flat web of a film (19) comprising at least one heat-shrinkable layer (20) is firstly shaped around a forming shoulder and is formed into a tube by a longitudinal weld seam (4), which extends in the feed direction (Z) of the tube, a length of the tube is filled with bulk material and the length sealed at the top and bottom end by transverse weld seams (2, 3) is severed from the fed bag material as a filled tubular bag (1)
**characterised in that**
the film additionally comprises a passive layer (21) which is joined to the heat-shrinkable layer (20); the heat-shrinkable layer (20) co-operates with a material (22) which is sensitive to microwaves and emits heat on exposure to microwaves and
the heat-shrinkable layer (20), the material (22) sensitive to microwaves and the passive layer (21) are joined to one another so that the film (19) is shaped in a predefined manner on exposure to microwaves.

2. Method as claimed in claim 1, **characterised in that** the heat-shrinkable layer (20), the material (22) sensitive to microwaves and the passive layer (21) of the film (19) joined to the heat-shrinkable layer (20) are disposed so that a linear pattern (12) is formed by the heat-shrinkable layer (20) on exposure to microwaves.

3. Method as claimed in claim 2, **characterised in that** the heat-shrinkable layer (20), the material (22) sensitive to microwaves and the passive layer of the film (19) joined to the heat-shrinkable layer (20) are disposed so that the linear pattern (12) imparted to the tubular bag (1) by the heat-shrinkable layer (20) on exposure to microwaves has essentially straight lines (11).

4. Method as claimed in claim 2 or 3, **characterised in that** the heat-shrinkable layer (20), the material (22) sensitive to microwaves and the layer of the film (19) joined to the heat-shrinkable layer (20) are disposed so that the linear pattern (12) imparted to the bag material by the heat-shrinkable layer (20) on exposure to microwaves has lines extending parallel with one another.

5. Method as claimed in one of claims 2 to 4, **characterised in that** individual lines (11) of the linear pattern (12) are disposed essentially parallel with the longitudinal weld seam (4) so that the lines (11) are distributed around the circumference of the tubular bag (1).

6. Method as claimed in claim 5, **characterised in that** individual lines (11) of the linear pattern (12) are disposed essentially parallel with the transverse weld seam (2; 3) so that several lines (11) are disposed one after the other in the feed direction (Z) of the tube on each portion of length to be formed.

7. Method as claimed in claim 6, **characterised in that** a distortion wedge (7, 8) is formed from several film layers at oppositely lying ends of each side wall (9, 10) and the film layers are joined to one another.

8. Method as claimed in claim 7, **characterised in that** no material (22) sensitive to microwaves is provided for a base portion (6) disposed between the side walls (9, 10).

9. Method as claimed in one of the preceding claims,
**characterised in that** the tube is formed with a triangular base surface transversely to the feed direction (Z) of the film (19) as viewed in section, the longitudinal weld seam (4) is disposed in the region of an apex (5) of this cross-sectional shape and the linear pattern (12) is disposed essentially across the entire wall portions (9, 10) extending as far as the apex (5).

10. Method as claimed in one of claims 2 to 9,
**characterised in that** the lines (11) of the linear pattern (12) are made up of alternating line portions (13).

11. Method as claimed in one of the preceding claims,
**characterised in that** the material (22) sensitive to microwaves is disposed between the heat-shrinkable layer (20) and the passive layer (21).

12. Method as claimed in one of the preceding claims,
**characterised in that** an at least three-layered film (19) is used.

13. Method as claimed in one of preceding claims 2 to 12, **characterised in that** orientations imparted to the heat-shrinkable layer (20) by stretching extend transversely to individual lines (11).

14. Film, in particular for manufacturing tubular bags, with a heat-shrinkable layer (20), wherein the film (19) additionally comprises a material (22) sensitive to microwaves which emits heat on exposure to microwaves, which co-operates with the heat-shrinkable layer (20), **characterised in that** the film (19) comprises a passive layer (21) which is joined to the heat-shrinkable layer (20), and the heat-shrinkable layer (20), the material (22) sensitive to microwaves and the passive layer (21) are joined to one another so that the film (19) is shaped in a predefined manner in the region of the material (22) sensitive to microwaves on exposure to microwaves.

15. Film as claimed in claim 14, **characterised in that** the surface overlap between the material (22) sensitive to microwaves and the heat-shrinkable layer (20) is small and the heat-shrinkable layer (20) is joined to the passive layer (21) by means of an adhesive so that the heat-shrinkable layer (20) is deformed in the region of the material (22) sensitive to microwaves on exposure to microwaves.

16. Film as claimed in claim 15, **characterised in that** no bonding is provided between the layers (20, 21) in the region where the deformation occurs.

17. Film as claimed in claim 15 or 16, **characterised in that** the adhesive is a heat-sensitive adhesive which is such that the adhesive effect of the heat-sensitive adhesive between the heat-shrinkable layer (20) and the passive layer (21) disappears in the region of the heat-sensitive material (22) on exposure to microwaves.

18. Film as claimed in claim 15 or 16, **characterised in that** the material (22) sensitive to microwaves is disposed between the heat-shrinkable layer (20) and the passive layer (21) and an anti-adhesive coating (23) is applied between the material (22) sensitive to microwaves and the passive layer (21).

19. Film as claimed in claim 15 or 16, **characterised in that** no bonding is provided between the heat-shrinkable layer (20) and the passive layer (21) in the region of the material (22) sensitive to microwaves.

20. Film as claimed in claim 14 or 15, **characterised in that** an adhesive joining the heat-shrinkable layer (20) to the passive layer (21) is disposed in a bonding pattern with a small surface coverage between the two layers (20, 21).

21. Film as claimed in claim 20 dependent on claim 14,
**characterised in that** the material (22) sensitive to microwaves is disposed across essentially the full surface between the two layers (20, 21).

22. Film as claimed in claim 20 or 21, **characterised in that** the adhesive is applied to the full surface of one layer (20; 21), so that adhesive-free regions of the adhesive pattern are formed by removing material from the layer (20, 21).

23. Film as claimed in claim 20 or 21, **characterised in that** the adhesive is applied to the full surface of one layer (20, 21), on which a perforated pattern corresponding to the adhesive pattern is formed by cutting.

24. Film as claimed in claim 20 or 21, **characterised in that** the adhesive is applied to the full surface and the adhesive pattern is formed by an anti-adhesive coating (23) applied between the adhesive and the adjacent layer (21; 22).

25. Film as claimed in one of claims 21 to 24, **characterised in that** the adhesive pattern is printed onto one of the layers (20, 21).

26. Film as claimed in one of claims 20 to 25,
**characterised in that** the passive layer (21) is formed by passive surface elements provided with a full-surface coating of adhesive, which are adhered to the heat-shrinkable layer (20) at a distance from one another to form adhesive-free regions of the adhesive pattern.

27. Film as claimed in one of claims 14 to 26,
**characterised by** two heat-shrinkable layers with a differing direction of shrinkage.

28. Film as claimed in one of claims 14 to 27,
**characterised by** two shrinkable layers with an essentially identical direction of shrinkage.

29. Film as claimed in one of claims 14 to 28,
**characterised by** two passive layers, each constituting the external face of the films.

30. Tubular bag with transverse weld seams (2, 3) disposed at oppositely lying ends of the tubular bag (1) and a longitudinal weld seam (4) extending transversely thereto, and the film (19) forming the tubular bag (1) comprises a heat-shrinkable layer (20),
**characterised in that**
the film additionally comprises a passive layer (21) which is joined to the heat-shrinkable layer (20), the heat-shrinkable layer (20) co-operates with a material (22) sensitive to microwaves which emits heat on exposure to microwaves and
the heat-shrinkable layer (20), the material (22) sensitive to microwaves and the passive layer (21) are joined to one another so that the film (19) is shaped in a predefined manner on exposure to microwaves.

31. Tubular bag as claimed in claim 30, **characterised by** a film as claimed in one of claims 14 to 29.

## Revendications

1. Procédé pour fabriquer un sachet tubulaire (1), selon lequel une bande plane de film (19) comprenant au moins une couche thermorétractable (20) est tout d'abord mise en forme sur un épaulement de formage et prend la forme d'un tube grâce à une soudure longitudinale (4) qui s'étend dans le sens d'amenée (Z) du tube, un produit en vrac est versé dans une partie longitudinale du tube, et la partie longitudinale fermée en haut et en bas par des soudures transversales (2, 3) est séparée, sous la forme d'un sachet tubulaire (1), du matériau d'emballage amené,
**caractérisé en ce que** le film comprend en supplément une couche passive (21) qui est reliée à la couche thermorétractable (20), **en ce qu'**une matière sensible aux micro-ondes (22) qui dégage de la chaleur lors d'une exposition aux micro-ondes est ajoutée à la couche thermorétractable (20) et **en ce que** ladite couche thermorétractable (20), la matière sensible aux micro-ondes (22) et la couche passive (21) sont reliées de telle sorte que le film (19), lors d'une exposition aux micro-ondes, subisse une déformation plastique prédéfinie.

2. Procédé selon la revendication 1, **caractérisé en ce que** la couche thermorétractable (20), le matériau sensible aux micro-ondes (22) et la couche passive (21) reliée à la couche thermorétractablé (20) du film (19) sont prévus de telle sorte qu'un motif de lignes (12) soit formé lors de l'exposition aux micro-ondes grâce à la couche thermorétractable (20).

3. Procédé selon la revendication 2, **caractérisé en ce que** la couche thermorétractable (20), la couche sensible aux micro-ondes (22) et la couche passive du film (19) reliée à la couche thermorétractable (20) du film (19) sont prévues de telle sorte que le motif de lignes (12) soit prévu avec des lignes (11) globalement droites sur le sachet tubulaire (1), lors de l'exposition aux micro-ondes, grâce à la couche thermorétractable (20).

4. Procédé selon la revendication 2 ou 3,
**caractérisé en ce que** la couche thermorétractable (20), le matériau sensible aux micro-ondes (22) et la couche du film (19) reliée à la couche thermorétractable (20) sont prévus de telle sorte que le motif de lignes (12) soit prévu avec des lignes (11) globalement parallèles sur le sachet tubulaire, lors de l'exposition aux micro-ondes, grâce à la couche thermorétractable (20).

5. Procédé selon l'une des revendications 2 à 4,
**caractérisé en ce que** des lignes individuelles (11) du motif de lignes (12) sont prévues globalement parallèlement à la soudure longitudinale (4) de telle sorte que les lignes (11) soient réparties sur la circonférence du sachet tubulaire (1).

6. Procédé selon la revendication 5, **caractérisé en ce que** des lignes individuelles (11) du motif de lignes (12) sont prévues globalement parallèlement à la soudure transversale (2 ; 3) de telle sorte que plusieurs lignes (11) soient disposées les unes derrière les autres dans le sens d'amenée (Z) du tube sur chaque tronçon longitudinal à former.

7. Procédé selon la revendication 6, **caractérisé en ce qu'**aux extrémités opposées de chaque paroi latérale (9, 10), une saillie (7, 8) composée de plusieurs couches de film est formée et les couches de film sont reliées entre elles.

8. Procédé selon la revendication 7, **caractérisé en ce qu'**il n'est pas prévu de matériau sensible aux micro-ondes (22) sur une partie de fond (6) qui se trouve entre les parois latérales (9, 10).

9. Procédé selon l'une des revendications précédentes, **caractérisé en ce que** le tube est pourvu d'une surface de base triangulaire, vue en coupe transversalement par rapport au sens d'amenée (Z) du film (19), **en ce que** la soudure longitudinale (4) est prévue dans la zone d'une pointe (5) de cette forme de section transversale et **en ce que** le motif de lignes (12) est prévu globalement sur toutes les parties de paroi (9, 10) qui vont jusqu'à la pointe (5).

10. Procédé selon l'une des revendications 2 à 9,
**caractérisé en ce que** les lignes (11) du motif de lignes (12) sont composées de tronçons de lignes (13) alternés.

11. Procédé selon l'une des revendications précédentes, **caractérisé en ce que** le matériau sensible aux micro-ondes (22) est disposé entre la couche thermorétractable (20) et la couche passive (21).

12. Procédé selon l'une des revendications précédentes, **caractérisé en ce qu'**on utilise un film au moins à trois couches (19).

13. Procédé selon l'une des revendications 2 à 12 précédentes, **caractérisé en ce que** des orientations obtenues par étirage dans la couche thermorétractable (20) sont transversales par rapport aux lignes individuelles (11).

14. Film, en particulier pour la fabrication de sachets tubulaires avec une couche thermorétractable (20), le film (19) comprenant par ailleurs un matériau sensible aux micro-ondes (22) qui dégage de la chaleur lors d'une exposition aux micro-ondes et qui est associé à ladite couche thermorétractable (20),
**caractérisé en ce que** le film (19) comprend une couche passive (21) qui est reliée à la couche thermorétractable (20), la couche thermorétractable (20), le matériau sensible aux micro-ondes (22) et la couche passive (21) étant reliés entre eux de telle sorte que le film (19), lors de l'exposition aux micro-ondes, subisse dans la zone du matériau sensible aux micro-ondes (22) une déformation plastique prédéfinie.

15. Film selon la revendication 14, **caractérisé en ce que** le recouvrement de surface entre le matériau sensible aux micro-ondes (22) et la couche thermorétractable (20) est faible et **en ce que** la couche thermorétractable (20) est reliée à la couche passive (21) à l'aide d'une colle de telle sorte que lors de l'exposition aux micro-ondes dans la zone du matériau sensible aux micro-ondes (22) la couche thermorétractable (20) soit déformée.

16. Film selon la revendication 15, **caractérisé en ce qu'**il n'est pas prévu de collage entre les couches (20, 21) dans la zone de la déformation.

17. Film selon la revendication 15 ou 16, **caractérisé en ce que** la colle consiste en une colle thermosensible qui est constituée de telle sorte que lors de l'exposition aux micro-ondes dans la zone du matériau thermosensible (22), l'action collante de la colle thermosensible entre la couche thermorétractable (20) et la couche passive (21) disparaisse.

18. Film selon la revendication 15 ou 16, **caractérisé en ce que** le matériau sensible aux micro-ondes (22) est prévu entre la couche thermorétractable (20) et la couche passive (21) et **en ce qu'**il est prévu un revêtement antiadhésif (23) entre le matériau sensible aux micro-ondes (22) et la couche passive (21).

19. Film selon la revendication 15 ou 16, **caractérisé en ce que** le collage entre la couche thermorétractable (20) et la couche passive (21) est absent dans la zone du matériau sensible aux micro-ondes (22).

20. Film selon la revendication 14 ou 15, **caractérisé en ce qu'**une colle qui relie la couche thermorétractable (20) à la couche passive (21) est prévue suivant un motif de colle avec un faible recouvrement de surface entre les deux couches (20, 21).

21. Film selon la revendication 20 dans la mesure où elle est dépendante de la revendication 14, **caractérisé en ce que** le matériau sensible aux micro-ondes (22) est prévu globalement sur toute la surface entre les deux couches (20, 21).

22. Film selon la revendication 20 ou 21, **caractérisé en ce que** la colle est appliquée sur toute la surface sur une couche (20 ; 21), sur la surface de laquelle le motif de colle est formé par enlèvement de matière de la couche (20, 21), pour former des zones sans colle.

23. Film selon la revendication 20 ou 21, **caractérisé en ce que** la colle est appliquée sur toute la surface sur une couche (20, 21) sur laquelle un motif de trous correspondant au motif de colle est formé par découpage.

24. Film selon la revendication 20 ou 21, **caractérisé en ce que** la colle est appliquée sur toute la surface et le motif de colle est formé par un revêtement antiadhésif (23) qui est appliqué entre la colle et la couche voisine (21 ; 22).

25. Film selon l'une des revendications 21 à 24,
**caractérisé en ce que** le motif de colle est imprimé sur l'une des couches (20, 21).

26. Film selon l'une des revendications 20 à 25,
**caractérisé en ce que** la couche passive (21) est formée à partir d'éléments de surface passifs qui sont pourvus, sur toute la surface, de colle et qui sont collés sur la couche thermorétractable (20), espacés les uns des autres, pour former des zones sans colle du motif de colle.

27. Film selon l'une des revendications 14 à 26,
**caractérisé par** deux couches thermorétractables de sens de rétraction différents.

28. Film selon l'une des revendications 14 à 27,
**caractérisé par** deux couches rétractables avec globalement le même sens de rétraction.

29. Film selon l'une des revendications 14 à 28,
**caractérisé par** deux couches passives qui forment chacune un côté extérieur des films.

30. Sachet tubulaire avec des soudures transversales (2, 3) qui sont prévues aux extrémités opposées du sachet tubulaire (1) et une soudure longitudinale (4) qui s'étend perpendiculairement auxdites soudures (2, 3), le film (19) qui forme le sachet tubulaire (1) comprenant une couche thermorétractable (20),
**caractérisé en ce que** le film comprend en supplément une couche passive (21) qui est reliée à la couche thermorétractable (20), **en ce qu'**un matériau sensible aux micro-ondes (22) qui dégage de la chaleur lors d'une exposition aux micro-ondes est associé à la couche thermorétractable (20) et **en ce que** la couche thermorétractable (20), le matériau sensible aux micro-ondes (22) et la couche passive (21) sont reliés entre eux de telle sorte que le film (19), lors de l'exposition aux micro-ondes, subisse une déformation plastique prédéfinie.

31. Sachet tubulaire selon la revendication 30,
**caractérisé par** un film selon l'une des revendications 14 à 29.
